# EUROPÄISCHE PATENTSCHRIFT

(11) **EP 1 205 067 B1**
(45) Veröffentlichungstag und Bekanntmachung des Hinweises auf die Patenterteilung: **23.04.2003**
(21) Anmeldenummer: 00952945.4
(22) Anmeldetag: 20.07.2000
(51) Int. Cl.: H04N 7/14

(54) **MOBILES BILDTELEFON**
MOBILE VIDEOPHONE
VISIOPHONE MOBILE

(30) Priorität: 22.07.1999 DE 19934507
(43) Veröffentlichungstag der Anmeldung: 15.05.2002
(73) Patentinhaber: SIEMENS AKTIENGESELLSCHAFT, 80333 München (DE)
(72) Erfinder: BOCK, Gerhard, D-82152 Krailling (DE); WERNER, Marco, D-81475 München (DE)
(86) Internationale Anmeldenummer: DE0002379
(87) Internationale Veröffentlichungsnummer: WO01008409

(56) Entgegenhaltungen:
- WO-A-97/38526
- DE-A- 19 736 675
- PATENT ABSTRACTS OF JAPAN vol. 1995, no. 07, 31. August 1995 (1995-08-31) & JP 07 095549 A (CANON INC), 7. April 1995 (1995-04-07) -& US 5 936 610 A (ENDO SHOZO) 10. August 1999 (1999-08-10)

## Beschreibung

Die Erfindung betrifft ein mobiles Bildtelefon mit einer ersten Bildaufnahmeeinheit, welche einen ersten Aufnahmebereich erfaßt.

Zur Aufzeichnung eines Bildes weisen sowohl mobile als auch standortgebundene Bildtelefone eine Kamera mit einer Bildaufnahmeeinheit und mit einer Auswerteeinheit auf, die den Bildaufnahmesensor ausliest und die Daten weiterverarbeitet. Die Bildaufnahmeeinheit besteht in der Regel aus einem Bildaufnahmesensor, beispielsweise einem CCD-Chip, und einem Objektiv.

Während des Gesprächs soll normalerweise der Gesprächspartner den Benutzer sehen können. Daher ist die Bildaufnahmeeinheit üblicherweise derart am Bildtelefon angeordnet, daß in der Benutzungsstellung des Bildtelefons, in der der Benutzer die Tasten bedienen und den Bildschirm beobachten kann, das Gesicht des Benutzers innerhalb des Aufnahmebereichs der Bildaufnahmeeinheit liegt.

Insbesondere bei mobilen Bildtelefonen ist es jedoch wünschenswert, wenn nicht nur Bilder vom Gesicht des Benutzers übertragen werden können, sondern dem Gesprächspartner auch Gegenstände und Lokalitäten gezeigt werden können. Hierzu muß die Blickrichtung der Kamera verändert werden, das heißt, der Aufnahmebereich der Bildaufnahmeeinheit muß so verdreht werden, daß das gewünschte Objekt im Aufnahmebereich liegt. Bei einer fest am mobilen Bildtelefon angeordneten Bildaufnahmeeinheit müßte hierzu das gesamte Bildtelefon gedreht werden. Dabei würde zwangsläufig auch das Bedienerfeld mit den Tasten und dem Bildschirm verdreht, so daß eine Benutzung äußerst erschwert oder gar nicht mehr möglich ist.

Eine mechanische Lösung des Problems, wie beispielsweise eine schwenkbar an dem Bildtelefon angeordnete Kamera oder eine schwenkbar vor der Kamera angebrachte Spiegelklappe, erfordert einen relativ großen konstruktiven Aufwand. Zudem geht eine solche mechanische Konstruktion auf Kosten der Robustheit des mobilen Bildtelefons.

Aus der Druckschrift JP-A-7 095549 ist ein stationäres System mit zwei Kameras bekannt. Diese Kameras können auf unterschiedliche Ziele gerichtet werden. Das Dokument WO-A-97 38526 beschreibt ein mobiles Videoüberwachungssystem mit mehreren Kameras, beispielsweise für mobile Verkehrsüberwachung.

Es ist daher Aufgabe der Erfindung, eine Alternative zu dem bekannten Stand der Technik zu schaffen.

Diese Aufgabe wird dadurch gelöst, daß das Bildtelefon mindestens eine zweite Bildaufnahmeeinheit aufweist, welche einen dem ersten Aufnahmebereich gegenüberliegenden zweiten Aufnahmebereich erfaßt.

Der Benutzer kann das erfindungsgemäße Bildtelefon folglich immer in einer Stellung halten, in der das Bedienerfeld die vorgesehene optimale Lage zur Benutzung hat. In dieser Lage liegt das Gesicht des Benutzers im Aufnahmebereich der ersten Bildaufnahmeeinheit. Da der Aufnahmebereich der zweiten Bildaufnahmeeinheit direkt dem ersten Aufnahmebereich gegenüberliegt, liegt dieser zweite Aufnahmebereich zwangsläufig innerhalb des möglichen Blickfelds des Benutzers. Das heißt, der zweite Aufnahmebereich erfaßt automatisch das Objekt, welchem sich der Benutzer zugewandt hat, und worüber in der Regel der Benutzer mit dem Gesprächspartner spricht und welches dem Gesprächspartner gezeigt werden soll.

Da je nach Aufnahmebereich die Bedingungen zur Erzeugung eines optimalen Bilds differieren können, weisen die Bildaufnahmeeinheiten vorzugsweise unterschiedliche optische Parameter, beispielsweise unterschiedliche Brennweiten, Aufnahmewinkel oder Tiefenschärfen, auf.

Wenn ein ausreichend breites Übertragungsband zur Verfügung steht, ist es im Prinzip möglich, daß die Daten beider Bildaufnahmeeinheiten gleichzeitig verarbeitet werden und beide Bilder gleichzeitig an den Gesprächspartner übermittelt werden. Dieser kann dann selber entscheiden, welches der beiden Bilder er auf seinem Bildschirm anschauen will oder ob beide Bilder parallel, beispielsweise auf einem geteilten Bildschirm oder als "Bild im Bild", dargestellt werden sollen.

Bei einem besonders bevorzugten Ausführungsbeispiel weist das Bildtelefon einen Aufnahmeumschalter zwischen den Bildaufnahmeeinheiten auf, so daß je nach Schaltstellung entweder nur das eine oder das andere Bild verarbeitet und übertragen wird.

Die Bildaufnahmeeinheiten können dabei mit einer gemeinsamen Auswerteeinheit verbunden sein, wobei beispielsweise durch den Umschalter festgelegt wird, welche Bildaufnahmeeinheit von der Auswerteeinheit ausgelesen wird. Dieses Ausführungsbeispiel ist besonders kostengünstig, da eine Auswerteeinheit eingespart wird.

Weiterhin kann das Bildtelefon einen zusätzlichen Bildschirmumschalter aufweisen, mit dem der Benutzer auswählen kann, ob auf seinem Bildschirm das derzeit vom Bildtelefon gesendete oder empfangene Bild dargestellt wird. Selbstverständlich kann auch ein Betriebszustand vorgesehen sein, bei dem beide Bilder parallel, beispielsweise auf einem geteilten Bildschirm oder als "Bild im Bild", dargestellt werden.

Sowohl bei dem Aufnahmeumschalter als auch bei dem Bildschirmumschalter kann es sich um eine Taste handeln, welche elektronisch die Umschaltung durchführt. Hierfür können beispielsweise Tasten verwendet werden, welche ohnehin auf dem Tastenfeld vorhanden sind und denen in einem bestimmten Betriebsmodus die jeweilige spezielle Umschaltfunktion zugewiesen wird.

Die Umschaltung kann auch derart ausgestaltet sein, daß nur während des Gedrückthaltens der Taste sich der Betriebszustand ändert und beim Loslassen der Taste das Bildtelefon wieder den vorherigen Betriebszustand einnimmt.

Die Vorteile des erfindungsgemäßen Bildtelefons ergeben sich insbesondere bei hohen Robustheitsanforderungen oder auch bei geringeren Stückzahlen, bei denen ein hoher konstruktiver Aufwand wirtschaftlich ungünstig ist.

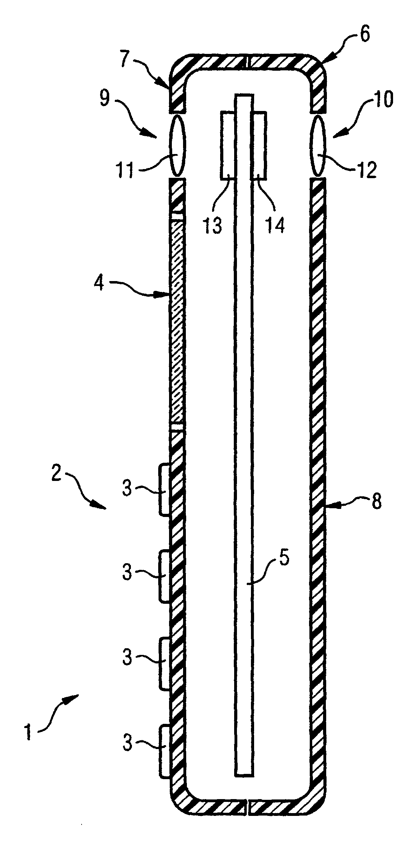

Die Erfindung wird im folgenden anhand eines Ausführungsbeispiels unter Hinweis auf die beigefügte Figur 1 näher erläutert.

Figur 1 zeigt schematisch einen seitlichen Schnitt eines mobilen Bildtelefons 1. Dieses Bildtelefon 1 weist ein Gehäuse 6 auf, welches wie üblich aus einer vorderen und einer hinteren Halbschale besteht.

In der Abbildung sind der Einfachheit halber nur die Komponenten dargestellt, die zur Erklärung der Erfindung notwendig sind.

An der Vorderseite 7 des Bildtelefons 1 befindet sich das Bedienerfeld 2, bestehend aus einem Bildschirm 4 und einem Tastenfeld 3.

Innerhalb des Gehäuses 6 ist auf übliche Weise eine Platine 5 angeordnet, auf der sich die gesamte Elektronik des mobilen Bildtelefons 1 befindet.

Die Platine 5 trägt im oberen Bereich auf ihrer Vorderseite einen vorderen Bildaufnahmesensor 13 in Form eines CCD-Chips. Direkt diesem vorderen Bildaufnahmesensor 13 gegenüberliegend befindet sich auf der Rückseite der Platine 5 ein hinterer Bildaufnahmesensor 14, ebenfalls in Form eines CCD-Chips. Beide Bildaufnahmesensoren 13, 14 sind mit einer auf der Platine 5 befindlichen - nicht dargestellten - gemeinsamen Auswerteeinheit verbunden. Mit einer der Tasten des Tastenfelds 3 kann eingestellt werden, welcher Bildaufnahmesensor 13, 14 von der Auswerteeinheit ausgelesen wird.

Vor den Bildaufnahmesensoren 13, 14 befindet sich in der Vorderseite 7 und der Hinterseite 8 des Gehäuses 6 jeweils eine entsprechende Öffnung mit einem Objektiv 11, 12 angeordnet. Dieses Objektiv 11, 12 kann aus einer einfachen Linse oder einem Linsensystem bestehen.

Bei dem dargestellten, besonders bevorzugten und kostengünstigen Ausführungsbeispiel sind folglich die beiden Bildaufnahmeeinheiten 9, 10 in das Gehäuse 6 des Bildtelefons 1 integriert, wobei der erste Aufnahmebereich dem Bedienerfeld 2 an der Vorderseite 7 und der zweite Aufnahmebereich der Rückseite 8 des Bildtelefons 1 gegenüberliegt. Der Benutzer kann daher das Bildtelefon 1 so halten, daß er direkt auf das Bedienerfeld schauen kann, wobei sein Gesicht von der vorderen Bildaufnahmeeinheit 9 erfaßt wird. Die hintere Bildaufnahmeeinheit 10 erfaßt dann genau den Bereich, den der Benutzer sieht, wenn er am Bildtelefon 1 vorbeischaut. Der Benutzer hat also sowohl das Bedienerfeld 2 als auch das Objekt im Blickfeld, das er ggf. dem Gesprächspartner zeigen möchte.

Entsprechend den gewünschten Bildausschnitten, ist das auf das Gesicht des Benutzers gerichtete Objektiv 11 ein Weitwinkelobjektiv und das gegenüberliegende, auf das gewünschte, meist entfernt liegendere Objekt gerichtete Objektiv 12 ein Normalobjektiv.

Damit der Benutzer kontrollieren kann, welches Objekt sich gerade im Aufnahmebereich befindet, das heißt welches Bild tatsächlich gesendet wird, weist das Bildtelefon außerdem einen Bildschirmumschalter bzw. eine Taste mit einer entsprechenden Umschaltfunktion auf. Damit kann der Benutzer einstellen, ob das von einer der Bildaufnahmeeinheiten 9, 10 aufgenommene und gesendete Bild oder das derzeit von dem Bildtelefon 1 empfangene Bild auf dem Bildschirm 4 dargestellt wird.

Bei dem vorliegenden Ausführungsbeispiel wird normalerweise das empfangene Bild auf dem Bildschirm 4 dargestellt. Nach dem Drücken der Bildschirmumschalttaste wird dann für eine bestimmt Zeitdauer, beispielsweise 5 Sekunden lang, das vom Bildtelefon 1 selbst gesendete Bild angezeigt. Dies reicht in der Regel aus, daß der Benutzer das Bildtelefon 1 auf das gewünschte Objekt ausrichten kann, dessen Bild übertragen werden soll. Das Bildtelefon 1 besitzt hierzu eine entsprechende Zeitumschalteinrichtung, welche nach einer bestimmten, einstellbaren Zeitdauer nach der Betätigung des Bildschirmumschalters selbsttätig zurückschaltet.

Es wird noch einmal darauf hingewiesen, daß die Erfindung nicht auf das dargestellte Ausführungsbeispiel beschränkt ist. Insbesondere ist unter dem Begriff "mobiles Bildtelefon" im Sinne dieser Schrift jedes mobile Gerät zu verstehen, das zur Kommunikation mittels der Übertragung von Bild und Sprache dient, also beispielsweise auch mobile Geräte wie Notebooks etc., die eine entsprechende Bildtelefonfunktion aufweisen.

## Patentansprüche

1. Mobiles Bildtelefon (1) mit einer ersten Bildaufnahmeeinheit (9), welche einen ersten Aufnahmebereich erfaßt, **gekennzeichnet durch** mindestens eine zweite Bildaufnahmeeinheit (10), welche einen dem ersten Aufnahmebereich gegenüberliegenden zweiten Aufnahmebereich erfaßt.

2. Bildtelefon nach Anspruch 1, **gekennzeichnet durch** einen Aufnahmeumschalter, mit welchem einstellbar ist, von welcher der Bildaufnahmeeinheiten (9, 10) ein aufgenommenes Bild verarbeitet und/oder übertragen wird.

3. Bildtelefon nach Anspruch 1 oder 2, **dadurch gekennzeichnet, daß** die Bildaufnahmeeinheiten (9, 10) mit einer gemeinsamen Auswerteeinheit verbunden sind.

4. Bildtelefon nach einem der vorstehenden Ansprüche, **gekennzeichnet durch** einen Bildschirmumschalter, mit welchem einstellbar ist, ob ein von einer Bildaufnahmeeinheit (9, 10) des Bildtelefons (1) aufgenommenes Bild und/oder ein von dem Bildtelefon empfangenes Bild auf dem Bildschirm (4) dargestellt wird.

5. Bildtelefon nach einem der vorstehenden Ansprüche, **dadurch gekennzeichnet, daß** der Aufnahmeumschalter und/oder der Bildschirmumschalter ein Taster ist.

6. Bildtelefon nach einem der vorstehenden Ansprüche, **gekennzeichnet durch** mindestens eine Zeitumschalteinrichtung, welche nach einer bestimmten Zeitdauer nach einer Betätigung des Aufnahmeumschalters und/oder des Bildschirmumschalters in den vor der Umschalterbetätigung vorliegenden Betriebszustand zurückschaltet.

7. Bildtelefon nach einem der vorstehenden Ansprüche, **dadurch gekennzeichnet, daß** der erste Aufnahmebereich einem Bedienerfeld (2) an einer Vorderseite (7) des Bildtelefons (1) und der zweite Aufnahmebereich der Rückseite (8) des Bildtelefons (1) gegenüberliegt.

8. Bildtelefon nach einem der vorstehenden Ansprüche, **dadurch gekennzeichnet, daß** die Bildaufnahmeeinheiten (9, 10) unterschiedliche optische Parameter aufweisen.

9. Bildtelefon nach einem der vorstehenden Ansprüche, **dadurch gekennzeichnet, daß** die erste Bildaufnahmeeinheit (9) und/oder die zweite Bildaufnahmeeinheit (10) in ein Gehäuse (6) des Bildtelefons (1) integriert sind.

10. Bildtelefon nach Anspruch 9, **dadurch gekennzeichnet, daß** im Gehäuse (6) des Mobiltelefons (1) auf einer Vorderseite und einer Rückseite einer Platine (5) jeweils ein Bildaufnahmesensor (13, 14) angeordnet ist und das Gehäuse (6) an seiner Vorderseite (7) und seiner Rückseite (8) gegenüberliegend den Bildaufnahmesensoren (13, 14) jeweils eine Öffnung mit einem Objektiv (11, 12) aufweist.

## Claims

1. Mobile videotelephone (1) having a first picture recording unit (9) which covers a first recording area, **characterized by** at least one second picture recording unit (10), which covers a second recording area that is opposite the first recording area.

2. Videotelephone according to Claim 1, **characterized by** a recording changeover switch, by means of which it is possible to select the picture recording unit (9, 10) from which a recorded picture is processed and/or transmitted.

3. Videotelephone according to Claim 1 or 2, **characterized in that** the picture recording units (9, 10) are connected to a common evaluation unit.

4. Videotelephone according to one of the preceding claims, **characterized by** a screen changeover switch, by means of which it is possible to select whether a picture which is recorded by a picture recording unit (9, 10) for the video telephone (1) and/or a picture which is received by the videotelephone is displayed on the screen (4).

5. Videotelephone according to one of the preceding claims, **characterized in that** the recording changeover switch and/or the screen changeover switch are/is a push button.

6. Videotelephone according to one of the preceding claims, **characterized by** at least one time changeover switching device, which switches back to the operating state which existed before the changeover switch operation once a specific time period has elapsed since operation of the recording changeover switch and/or of the screen changeover switch.

7. Videotelephone according to one of the preceding claims, **characterized in that** the first recording area is opposite an operator area (2) on a front face (7) of the video telephone (1), and the second recording area is opposite the rear face (8) of the video telephone (1).

8. Videotelephone according to one of the preceding claims, **characterized in that** the picture recording units (9, 10) have different optical parameters.

9. Videotelephone according to one of the preceding claims, **characterized in that** the first picture recording unit (9) and/or the second picture recording unit (10) are/is integrated in a housing (6) of the videotelephone (1).

10. Videotelephone according to Claim 9, **characterized in that** a picture recording sensor (13, 14) is in each case arranged on a front face and on a rear face of a board (5) in the housing (6) of the mobile telephone (1), and the housing (6) in each case has an opening with an objective (11, 12) on its front face (7) and on its rear face (8), opposite the picture recording sensors (13, 14).

## Revendications

1. Visiophone mobile (1) équipé d'une première unité de prise de vue (9), laquelle capte un premier angle de prise de vue, et **caractérisé par** au moins une deuxième unité de prise de vue (10), laquelle capte un deuxième angle de prise de vue opposé au premier angle de prise de vue.

2. Visiophone selon la revendication 1, **caractérisé par** un commutateur de prise de vue, permettant de régler à partir de quelle unité de prise de vue (9, 10) une image prise est traitée et/ou transmise.

3. Visiophone selon la revendication 1 ou 2, **caractérisé en ce que** les unités de prise de vue (9, 10) sont reliées à une unité d'analyse commune.

4. Visiophone selon l'une des revendications précédentes, **caractérisé par** un commutateur d'écran permettant de régler si une image prise par une unité de prise de vue (9, 10) du visiophone (1) et/ou une image reçue par le visiophone est affichée à l'écran (4).

5. Visiophone selon l'une des revendications précédentes, **caractérisé en ce que** le commutateur de prise de vue et/ou le commutateur d'écran est un bouton-poussoir.

6. Visiophone selon l'une des revendications précédentes, **caractérisé par** au moins un dispositif de commutation temporisée, lequel, après une certaine période suivant un actionnement du commutateur de prise de vue et/ou du commutateur d'écran, repasse au mode de marche existant avant l'actionnement du commutateur.

7. Visiophone selon l'une des revendications précédentes, **caractérisé en ce que** le premier angle de prise de vue est opposé à un panneau de commande (2) sur une face avant (7) du visiophone (1), et le deuxième angle de prise de vue, à la face arrière (8) du visiophone (1).

8. Visiophone selon l'une des revendications précédentes, **caractérisé en ce que** les unités de prise de vue (9, 10) présentent des paramètres optiques différents.

9. Visiophone selon l'une des revendications précédentes, **caractérisé en ce que** la première unité de prise de vue (9) et/ou la deuxième unité de prise de vue (10) sont intégrées à un boîtier (6) du visiophone (1).

10. Visiophone selon la revendication 9, **caractérisé en ce qu'**un capteur de prise de vue (13, 14) est disposé dans le boîtier (6) du visiophone (1) sur chacune des faces avant et arrière d'une platine (5), et **en ce que** le boîtier (6) présente un orifice avec un objectif (11, 12) sur chacune de ses faces avant (7) et arrière (8), à l'opposé du capteur de prise de vue respectif (13, 14).
